# EUROPEAN PATENT APPLICATION

(11) **EP 1 054 571 A2**
(43) Date of publication of application: **22.11.2000**
(21) Application number: 99308813.7
(22) Date of filing: 05.11.1999
(51) Int. Cl.: H04Q 7/38

(54) **Method for automatically forwarding calls**

(30) Priority: 18.05.1999 GB 9911580
(71) Applicant: VTech Communications, Ltd., Tai Po, N.T (HK)
(72) Inventor: Murphy, Paul A. Esq., Tai Po, NT (HK)
(74) Representative: Loveless, Ian Mark

(57) **Abstract**

A method for redirecting telephone calls directed to a cellular telephone is provided which includes a cellular telephone, a storage cradle, such that calls to the cellular telephone are forwarded when the cellular telephone is placed in the cradle. The method may also cease the forwarding of calls directed to the cellular telephone upon removal of the cellular telephone from the cradle. The initiation or termination of call forwarding may occur after some delay following the cellular telephone's placement in or removal from the cradle. The cradle may provide an option to activate or deactivate the call forwarding feature. Activation and deactivation of the feature may also be controlled by a programmable timer. The cradle may optionally recharge the cellular telephone's battery pack while the cellular telephone is in the cradle.

## Description

### TECHNICAL FIELD

The present invention relates to automatically forwarding telephone calls.

### BACKGROUND OF THE INVENTION

Cellular and wireless telephones have become important and ubiquitous tools of communication in today's society. Cellular or wireless telephones provide a convenient means by which a subscriber to services offered by a cellular or wireless communication services network operator can telephone others at nearly any time or place. Furthermore, a cellular subscriber can conveniently be contacted by friends, family or business associates by dialling the telephone number assigned to the subscriber by the cellular wireless network operator no matter where the subscriber may be located within the geographical region serviced.

While cellular telephones have greatly facilitated communications between members of society, certain aspects of the operation continue to limit their effectiveness. For example, portable cellular telephones have limited battery life - consequently their batteries must frequently be recharged. Cellular telephone batteries are commonly recharged using devices called cradles, whereby the cellular telephone is placed in the cradle for several hours while the cradle remains plugged into an electric wall outlet. In some cases calls placed to or from a cellular telephone using the cellular telephone network are significantly more expensive than calls made exclusively over land-line based telephone networks. Further, due to the frequency at which cellular and wireless telephones operate, it is common to travel into areas in which the cellular phone is unable to access the wireless network due to signal interference, out of range conditions or other events or circumstances beyond the control of the user. Because of aspects such as these, many users often have their cellular telephones powered off to conserve battery power and/or reduce cellular service charges. However, when the cellular telephone is powered off, the user cannot be reached by others at the single convenient cellular telephone number.

Modern cellular network operators and cellular service providers have implemented several features to ameliorate the inconvenience caused when cellular subscribers do not have their cellular telephones powered on or immediately handy. Voice mail, a telephone answering service maintained by the telephone company allows callers to the cellular subscriber's cell phone number to leave messages when a subscriber does not answer the cellular telephone or has his cell phone powered off. Thereafter a subscriber can retrieve any messages left by callers when the subscriber powers the cell phone on or returns to the cell phone. However, receipt of such a message is obviously delayed, and a caller cannot obtain immediate response to pressing matters.

Both land based telephone network providers and cellular service providers also commonly provide subscribers with the ability to utilise an optional service which is commonly know as a "call forwarding" or "call divert" service, whereby a subscriber can manually contact the telephone network operator and specify another telephone number to which calls placed to the subscriber's assigned telephone number should be redirected. For example, while a cellular network subscriber is in his or her office, he or she can contact the cellular network provider and instruct that calls placed by others to the subscriber's assigned cellular telephone number be redirected, or "forwarded" to his or her land based telephone network telephone number. Once activated the subscriber will receive all calls placed to the cellular telephone at the forwarded telephone number. Accordingly and furthermore, when the subscriber is unavailable to answer a call to the cellular telephone, the calling party can be assisted by the subscriber's secretary or receptionist. However, in the foregoing example, upon leaving the office with the cellular phone the subscriber must manually contact the wireless network provider to manually deactivate the call forwarding so that calls placed to the cellular phone number are no longer redirected to the forwarded number and instead are permitted to be received by the cellular phone.

While call forwarding services as implemented today are helpful, they can still be potentially cumbersome and inconvenient to use and thus are not used to their fullest potential because, in part, the cellular subscriber must remember to manually enable the call forwarding service whenever the subscriber reaches a destination at which he/she wishes calls to be forwarded from the cellular telephone number to another specified telephone number, and must thereafter remember to manually disable the feature when it is no longer desirable for calls to be forwarded. If a subscriber forgets or lacks the time to enable the service, calls placed to the subscriber's cellular telephone will go unanswered. If a subscriber forgets to disable the forwarding service, calls will continue to be redirected to the forwarded telephone number and calls placed to the subscriber will not reach him or her at the cell phone and accordingly may again go unanswered.

### SUMMARY OF THE INVENTION

We have appreciated the need to provide a convenient method of automatically controlling a cellular service providers call forwarding feature without requiring cumbersome or intentional intervention on the part of the subscriber.

Accordingly, in a broad aspect, the invention provides a method whereby a subscriber simply places a cellular telephone in a local cradle upon reaching a destination whereupon call forwarding will automatically be activated and a predetermined forwarding number will be conveyed to the cellular network.

In particular there is provided a method of causing a telephone call placed to a cellular telephone subscriber to be redirected to a telephone number other than that which is assigned to the subscriber's cellular telephone, which method comprises the following: placing the cellular telephone in a cradle; detecting the presence of the cellular telephone in the cradle; enabling the call forwarding option provided by the cellular wireless telephone network in response to detecting the presence of the cellular telephone in the cradle; and redirecting calls placed to the cellular telephone to another predetermined telephone number while the cellular telephone resides in the cradle; whereby telephone calls which are placed to the subscriber's cellular telephone number are redirected to another telephone number during such time as the cellular telephone resides in the cradle.

This provides the advantage that calls placed to a subscriber's cellular telephone after the telephone has been placed in a cradle will be diverted to a specified telephone number associated with and/or commanded by the cradle without any intervention by the subscriber. This invention thereby avoids the cumbersome need to manually activate call forwarding and manually specify a forwarding telephone number, and the inconvenience of missing calls when a user forgets to activate call forwarding.

A further aspect of this invention resides in causing calls to resume being received at the subscriber's cellular telephone upon the subscriber's removal of the phone from the cradle, without any further intervention by the subscriber. In particular, there is provided a method of causing a telephone call placed to a cellular telephone subscriber to be redirected to a telephone number other than that which is assigned to the subscriber's cellular phone, which method comprises the following: detecting that the cellular telephone has been placed in a cradle; communicating from the cradle to the cellular telephone a forwarding telephone number to which calls placed to the subscriber's cellular telephone are to be redirected; connecting the cellular telephone to the wireless telephone network; communicating to the wireless telephone network the forwarding telephone number; and disconnecting the cellular telephone from the wireless network whereby calls which are thereafter placed to the cellular telephone subscriber are automatically redirected to the forwarding telephone number.

This avoids the effort required to manually cancel call forwarding, as well as the inconvenience of missing calls when a subscriber forgets to cancel call forwarding.

Another aspect of this invention resides in recharging the cellular telephone's battery pack while the phone resides within the cradle, thereby helping to ensure that the cellular telephone has sufficient battery charge each time the subscriber removes the cellular phone from its cradle.

A further aspect of the invention resides in providing a user with the ability to disable the call forwarding feature of the cradle, in the event that the user desires to continue receiving calls at the cellular telephone while it resides in a cradle.

A feature of an embodiment of this invention is to automatically disable the call forwarding feature during specific, selectable hours of the day so as to, for example, prevent the forward of calls to a subscriber's home telephone number after llpm, when the cellular telephone is being charged in a cradle overnight, so as not to disturb the subscriber's sleep.

An embodiment also allows a user to utilize multiple cradles in different locations. For example, a cellular telephone subscriber might have one cradle at home and one cradle at the office. After arriving to work, the subscriber may place his cellular telephone in the "office cradle". The embodiment of the invention would then cause all calls placed to the subscriber's cellular telephone to be redirected to the subscriber's office telephone. The subscriber can then receive any such calls immediately and inexpensively, without any further intervention or effort. Furthermore, in this manner calls to the subscriber's cellular telephone can be screened or prioritized by the subscriber's secretary. At the end of the day, the subscriber removes the cellular telephone from the cradle and departs the office. During the subscriber's commute home, calls will be received at his cellular telephone, again without any intervention from the subscriber. Finally, upon arriving home, the subscriber can simply deposit the cellular phone into his "home cradle". During the remainder of the evening, any calls placed to the subscriber's cellular telephone are automatically redirected to the subscriber's home telephone, where he may receive the calls immediately and inexpensively.

### DESCRIPTION OF THE DRAWINGS

An embodiment of the invention will now be described with reference to the figures in which:

Fig 1 is a schematic block diagram of one embodiment of the invention, whereby the forwarding telephone number to which calls are to be redirected is entered and remains stored in the cradle.

Fig 2 is a schematic block diagram of another embodiment of the invention, whereby the user sets switches within the cradle to specify a particular forwarding telephone number to which call are to be redirected, among one or more such forwarding numbers stored in the cellular telephone.

Fig 3 is a side and rear perspective view of the cellular telephone, specifically showing contacts which connect the cellular telephone to the cradle when set therein.

Fig 4 is a side perspective view of a cellular telephone and cradle.

### DETAILED DESCRIPTION OF AN EMBODIMENT OF THE INVENTION

While this invention is susceptible to embodiment in many different forms, there are shown in the drawings and will be described in detail herein several specific embodiments, with the understanding that the present disclosure is to be considered as an exemplification of the principle of the invention and is not intended to limit the invention to embodiments illustrated.

An embodiment broadly consists of a method of forwarding telephone calls directed to a subscriber's cellular telephone to a different telephone number. Specifically, this invention can be used to automatically have all incoming calls forwarded to a convenient, nearby landline telephone upon placement of the telephone in a cradle.

The embodiment involves both a cellular telephone, and a cradle. In one embodiment of the invention, the cradle communicates a specific telephone number to which calls should be forwarded when the cellular telephone is placed in its cradle. The telephone then connects to the wireless telephone network, and commands the network to redirect incoming calls to the specified number.

In another embodiment of the invention, the cradle specifies one of one or more forwarding numbers which has been previously programmed into the cellular telephone. The cellular telephone then connects to the wireless telephone network, and initiates call forwarding to the number specified by the cradle.

The cradle may include an option for the user to alternatively activate or deactivate the call forwarding functionality. By placing the cradle in the deactivated state, calls directed to the subscriber's cellular telephone will be received by the subscriber's cellular telephone, regardless of whether or not the telephone resides in the cradle.

An embodiment may also require the telephone to have been placed in the cradle continuously for a minimum period of time before initiating the activation of call forwarding, thereby eliminating undue telephone activity that may be caused by conditions such as contact bounce when the telephone is place in the cradle, or momentary placement in the cradle due to user indecision.

Another embodiment of the invention may include battery recharging circuitry in the cradle, allowing for recharging of the cellular telephone battery pack while the telephone resides in the cradle.

An embodiment may also automatically turn off the network's call forwarding feature. When the cellular phone detects that it has been removed from the cradle, or that the cradle has been deactivated, the cellular telephone can connect to the wireless telephone network and cancel the call forwarding feature, such that subsequent calls directed to the cellular telephone are actually received at the cellular telephone.

Cancellation of call forwarding caused by removal of the cellular telephone from the cradle may require that the telephone be absent from the cradle for a specified minimum time period before deactivation occurs. This aspect would prevent undue telephone activity that may be caused by events such as contact bounce when the telephone is placed in the cradle, or momentary indecision on the part of the subscriber as to whether or not he desires the phone to be placed in the cradle. Furthermore, such a minimum time period allows the subscriber to remove the telephone from the cradle to make a brief cellular call without waiting for the cellular telephone to unnecessarily change the call forwarding status on the wireless telephone network.

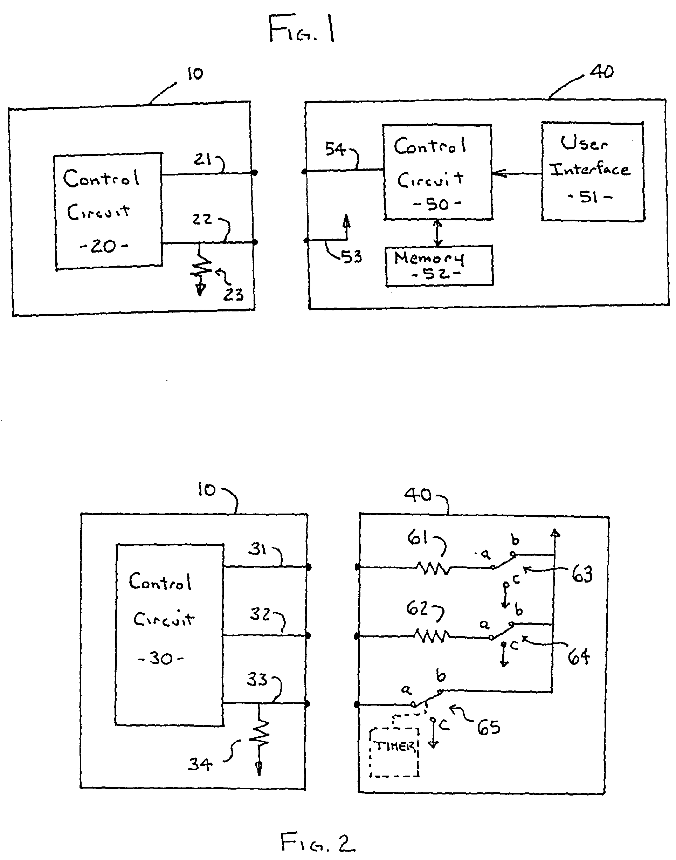

Fig 1 of the drawings illustrates a first embodiment of the present invention comprising cellular telephone 10 and cradle 40. In the embodiment illustrated the specific telephone number to which calls are to be forward is set and remains stored within the cradle. Cellular telephone 10 contains, in addition to the traditional circuitry and transmitter/receiver modules (not shown), control circuit 20, communications link 21, cradle presence detect line 22, and pulldown resistor 23. In the embodiment illustrated, it is contemplated that the control circuit 20 may be incorporated into and/or may comprise the micro-controller which typically resides with the cellular telephone in combination with software/firmware programming and cradle presence indicator 53. Cradle 40 contains control circuit 50, user interface 51, memory 52, and cradle presence indicator 53. Cradle presence detect line 22 within cellular telephone 10 is normally pulled to a logic low level through resistor 23. When cellular telephone 10 is set in cradle 40, the cradle presence indicator 53 contacts cradle presence detect line 22, thereby pulling line 22 to a logic high level, and serving to indicate to control circuit 20 that the cellular telephone 10 has been placed in a cradle 40 such that call forwarding should be activated.

It is contemplated as being in the scope of the present invention to detect that the cellular telephone has been placed in the cradle through other means well known to those skilled in the art. For example, other methods include, but are not limited to, detecting voltage or current on a charging pin where to a cradle includes battery recharging circuitry, or implementing digital messaging query between the cellular telephone and cradle control circuits. Additionally, a mechanical plunger switch could be used to detect the presence of the cellular telephone in the cradle. These and other means known to those skilled in the art may be employed without departing from the scope of the present invention.

User interface 51 allows the user to specify the forwarding telephone number which is to be communicated to the cellular telephone. The number is stored in memory 52. One possible embodiment of interface 51 includes a keypad and LCD display operatively connected to a micro-controller. One possible embodiment of memory 52 is a digital RAM chip. However, interface 51 and memory 52 could easily be implemented in a variety of digital, analog, or mechanical embodiments, as is known to one of ordinary skill in the art to accomplish the goal of setting and storing the forwarding telephone number.

Upon control circuit 20 detecting that cellular telephone 10 has been placed in cradle 40, the specific telephone number to which calls are to be forward is transferred from memory 52 by control circuit 50 to communications link 54. Because the cellular telephone and cradle are in physical contact with one another, link 54 is operably connected to link 21, over which the forwarding telephone number information may be received by cellular telephone control circuit 20.

Control circuit 20 proceeds to cause cellular telephone 10 to initiate a connection with the wireless telephone network, transfer the forwarding number information to the wireless network, and then terminate the connection with the network. This process typically merely requires the transmission to the network of a required series of DTMF tones with or without pauses. Call forwarding is thereby enabled, and any calls placed to the subscriber's cellular telephone forwarding service, are well known in the art and therefore will not be described herein.

According to one embodiment of the invention, call forwarding is terminated upon removal of cellular telephone 10 from cradle 40. Upon removal, cradle presence indicator 53 becomes disconnected from line 22. Line 22 is therefore pulled to a logic low state by resistor 23. Upon detection by control circuit 20 of the state change to logic low on line 22, circuit 20 initiates a connection with the wireless telephone network. Call forwarding is cancelled through the appropriate procedure as specified by the cellular service provider, and the cellular telephone is then disconnected from the network. This procedure mirrors that used to activate call forwarding and likewise typically consists of transmitting a series of DTMF tones. The steps of transferring the forwarding telephone number to cellular telephone 10 can take various alternatives. Control circuit 20 can communicate via links 21 and 54 to perform the transfer of the forwarding telephone from memory 42. Control circuit 20 can use this function as a "master" with control 50 acting as a "slave". In this manner, transfer of the forwarding telephone number does not occur until control circuit 20 is ready. Alternatively, control circuit 50 can act on its own to retrieve from memory 52 the forwarding telephone number towards transferring it to cellular telephone 10. The precise method and series of substeps are known to be one of ordinary skilled in the art, thereafter, subsequent calls directed to the subscriber's cellular telephone will be received by the cellular telephone.

According to another embodiment of the invention, control circuit 20 may require the state of cradle presence detect line 22 to remain in a new state for a minimum period of time before recognising a change of state. A short delay of several hundred milliseconds would prevent cellular telephone 10 from taking action to activate or deactivate call forwarding in the presence of contact bounce upon placement of the cellular telephone in the cradle 40. A longer delay may be desired to prevent the cellular telephone from taking unnecessary action when the user places the cellular telephone in the cradle or removes the cellular telephone from the cradle to place a brief call without waiting from a change of call forwarding status.

Fig 2 of the drawings illustrates an additional embodiment of the present invention comprising cellular telephone 10 and cradle 40, in which the specific telephone number to which calls are to forwarded is stored within the cellular telephone. Cellular telephone 10 of this additional embodiment includes control circuit 30, forwarding number selection lines 31 and 32, cradle activation line 33, and pulldown resistor 34. Cradle 40 includes resistors 61 and 62, and switches 63, 64 and 65.

While telephone 10 is disengaged from the cradle, cradle activation line 33 is pulled to a logic low level by resistor 34. Upon placement of telephone 10 in cradle 40, activation line 33 becomes connected to terminal "a" of switch 65. If the user has switch 65 set in the "a-c" position, the cradle is deactivated and line 33 remains low. Consequently, the cellular telephone does not detect that it has been placed in the cradle and thus automatic call forwarding is disabled. When switch 65 is set in the active "a-b" position, line 33 is pulled to a logic high level. When control circuit 30 detects line 33 at a high level, thereby detecting that the cellular telephone has been placed in the cradle, the cellular telephone 10 initiates a connection to the wireless telephone network. Cellular telephone 10 proceeds to communicate the specified forwarding telephone number to the network, by for example, transmitting a series of DTMF tones, before disconnecting from the network. Thereafter, calls placed to the subscriber's cellular telephone number are redirected to the specified forwarding number.

In this embodiment, the forwarding number to be communicated to the network is stored by the user into one of one or more memory areas in cellular telephone 10. This procedure may be thought of as being similar to programming "speed dial" numbers into a cellular telephone, or other cellular telephone programming procedures well known in the art. When more than one forwarding number is stored within cellular telephone 10, and the particular forwarding number to be used when the telephone is placed in particular cradle is determined by the position of switches 63 and 64 set by the user. When the telephone 10 is placed in cradle 40, terminal 63a is connected through resistor 61 to line 31. Similarly, terminal 64a is connected through resistor 62 to line 32. Control circuit 30 accordingly selects the forwarding telephone number memory location corresponding to the combination of logic levels on lines 31 and 32, as controlled by the positions of switches 63 and 64.

For example, lines 31 and 32 may form a two-bit binary number which refers to forwarding number memory locations in the cellular telephone. The subscriber may program his home telephone number into location 00 (designation by line 31 being logic low, and line 32 being logic low), and may program a first office telephone number into location 01, and a second office telephone number into location 10. Such a subscriber would set the home cradle with switch 63 to the a-c position and switch 64 in the a-c position - thus referring to location 00. The subscriber's cradle at a first office would have switch 63 set to the a-c position and switch 64 to the a-b position referring to location 01. Finally, the cradle in the subscriber's second office would have switch 63 set to the a-b position and switch 64 set to the a-c position - referring to location 10. Accordingly, if the subscriber simply set cellular telephone 10 into any of the "programmed" cradles wherever he goes, calls will always be forwarded to the correct forwarding telephone number without any further effort or intervention of the user part.

While the embodiment of Fig 2 includes switches 63 and 64 to select a forwarding telephone number, and a switch 65 to enable or disable call forwarding for a particular telephone number, and a switch 65 to enable or disable call forwarding for a particular cradle, these same functions could be easily implement by numerous other mechanical or electrical means as known to one of ordinary skill in the art, without departing from the scope of the invention. For example, cradle 40 could set logic levels of lines 31, 32 and 33 by a micro-controller, or other digital circuit. While Fig 2 shows two forwarding number selection lines 31 and 32, the step of specifying one of one or more forwarding numbers stored in the cellular telephone 10 could be accomplished by any desired implementation of one or more lines. Similarly, the forwarding number selection could be accomplished through a serial or parallel digital communications link between the cradle 40 and the cellular telephone control circuit 30.

Furthermore, the forwarding number selection circuit in the cradle need not be adjustable by the user. For example, the cradle circuit may simply convey an electronic serial number of the cradle to the cellular telephone. Cellular telephone 10 may then have a forwarding number programmed which corresponds to the specific serial number of the cradle within which the telephone resides.

Another embodiment of this invention incorporates cellular telephone battery recharging circuitry into the cradle, which is well known in the art. Such an embodiment would provide the additional functionality of recharging the cellular telephone's battery pack while the telephone resides in the cradle.

A further embodiment of the present invention includes an adjustable timer circuit which controls the cradle activation switch 65 of Fig 2. This timer circuit would include a clock, and allow the user to set a span of time of day during which time the call forwarding function implemented by the cradle is placed in its disable state. It can be configured to permit multiple "start" and "stop" times to be set to control when the call forwarding feature is enabled and disabled during the day. Such timer circuits are known in the art, and consequently will not be described in detail. As this feature would be implemented in the embodiment of Fig 2, the timer places switch 65 into the a-c position when it reaches the specified time for disabling call forwarding. When the timer reaches the specified time for reactivation, switch 65 is automatically placed into the a-b position. This embodiment allows a subscriber to prevent the forwarding of calls placed to the cellular phone during certain times of the day. For example, a subscriber may set the timer to deactivate his home cradle between the hours of 11pm and 7am, thereby preventing calls being forwarded to his home phone thus disturbing his sleep.

It is further contemplated that clock/control circuit may be included in telephone 10 and/or cradle 40, as appropriate, to cause the telephone 10 to reconnect to the network at a designated time of day to re-communicate the call forwarding commands to the network. As some telephone networks automatically cancel call forwarding instructions at midnight each day and require subscribers to reactivate the function each morning, the foregoing clock and control circuit serves to perpetuate the call forwarding of the telephone.

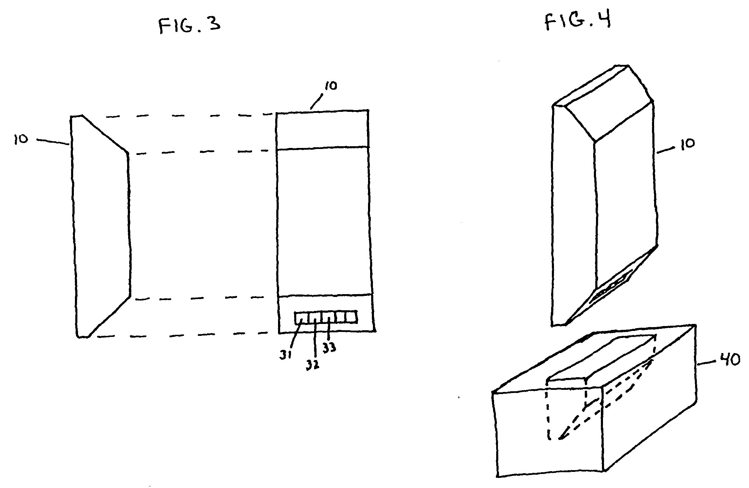

Fig 3 illustrates in particular the various contacts which are provided on the rear face of the cellular telephone 10. In addition to the two charging contacts which convey electrical power to recharge the battery pack within telephone 10, contacts 31, 32 and 33 referred to in Fig 2 are illustrated and serve to mate with corresponding contacts in cradle 40. Fig 4 specifically illustrates the positioning of telephone 10 into cradle 40 so as to electronically connect cellular telephone 10 and cradle 40.

The foregoing description and drawings merely explain and illustrate the invention and the invention is not limited thereto except insofar as the appended claims are so limited, inasmuch as those skilled in the art, having the present disclosure before them will be able to make modifications and variations therein without departing from the scope of the invention.

## Claims

1. A method of causing a telephone call placed to a cellular telephone subscriber to be redirected to a telephone number other than that which is assigned to the subscriber's cellular telephone, which method comprises the following:
placing the cellular telephone in a cradle;
detecting the presence of the cellular telephone in the cradle;
enabling the call forwarding option provided by the cellular wireless telephone network in response to detecting the presence of the cellular telephone in the cradle; and
redirecting calls placed to the cellular telephone to another predetermined telephone number while the cellular telephone resides in the cradle;
whereby telephone calls which are placed to the subscriber's cellular telephone number are redirected to another telephone number during such time as the cellular telephone resides in the cradle.

2. A method of causing a telephone call to be placed to a cellular telephone subscriber to be redirected to a telephone number other than that which is assigned to the subscribers's cellular telephone, which method comprises the following:
detecting that the cellular telephone has been placed in a cradle;
communicating from the cradle to the cellular telephone a forwarding telephone number to which calls placed to the subscriber's cellular telephone are to be redirected;
connecting the cellular telephone to the wireless telephone network;
communicating to the wireless telephone network the forwarding telephone number;
disconnecting the cellular telephone from the wireless network;
whereby calls which are thereafter placed to the cellular telephone subscriber are automatically redirected to the forwarding telephone number.

3. The invention according to claim 2, where the cradle may be alternatively set to activate or de-activate call forwarding, and where the step of detecting that the cellular telephone has been placed in a cradle further requires that the cradle in which the cellular telephone has been placed is in an activated state.

4. The invention according to claim 2, where the steps of connecting the telephone to the wireless telephone network occurs only after the cellular telephone has been placed in the cradle continuously for at least a minimum predetermined period of time.

5. The invention according to claim 2, further including the steps of recharging a battery pack associated with the cellular telephone during such time as the cellular telephone remains in the cradle.

6. The invention according to claim 2, further including the steps of:
detecting whether the cellular telephone has been removed from the cradle or whether call forwarding has been inactivated at the cradle;
connecting the cellular telephone to the wireless network;
communicating to the wireless telephone network the cancellation of call forwarding such that calls placed to the subscriber's cellular telephone are no longer redirected;
disconnecting the cellular telephone from the wireless telephone network;
whereby calls which are thereafter placed to the subscriber's cellular telephone are received by the cellular telephone.

7. The invention according to claim 3, further including the additional steps of placing the cradle into its inactive call forwarding mode thereby disabling call forwarding during a specified, selectable period of time.

8. The invention according to claim 6, where the step of connecting the cellular telephone to the wireless telephone network occurs only after the cellular telephone has been removed from the cradle continuously for at least a minimum predetermined period of time.

9. A method of causing a telephone call placed to a cellular telephone subscriber to be redirected to a telephone number other than that which is assigned to the subscriber's cellular telephone, which method comprises the following:
detecting that the cellular telephone has been placed in a cradle;
identifying from among one or more telephone numbers stored in the cellular telephone, a forwarding telephone number to which calls placed to the subscriber's cellular telephone are to be redirected;
connecting the cellular telephone to the wireless telephone network;
communicating to the wireless telephone network the forwarding telephone number;
disconnecting the cellular telephone from the wireless telephone network;
whereby calls which are thereafter placed to the subscriber's cellular telephone are automatically redirected to the forwarding telephone number.

10. The invention according to claim 9, wherein the cradle may be alternatively set to activate or deactivate call forwarding, and wherein the step of detecting that the cellular telephone has been placed in a cradle further requires that the cradle in which the cellular telephone has been placed is in an activated state.

11. The invention according to claim 9, wherein the steps of connecting the cellular telephone to the wireless telephone network occurs only after the cellular telephone has been placed in the cradle continuously for at least a minimum predetermined period of time.

12. The invention according to claim 9, further including the step of recharging a battery pack associated with the cellular telephone during such time as the cellular telephone remains in the cradle.

13. The invention according to claim 9, further including the steps of:
detecting whether the cellular telephone has been removed from the cradle or whether call forwarding has been inactivated at the cradle;
connecting the cellular telephone to the wireless network;
communicating to the wireless network the cancellation of call forwarding such that calls placed to the subscriber's cellular telephone are no longer redirected;
disconnecting the cellular telephone from the wireless network;
whereby calls which are thereafter placed to the subscriber's cellular telephone are received by the cellular telephone.

14. The invention according to claim 10, further including the addition step of placing the cradle into its inactive forwarding mode thereby disabling call forwarding during a specified, selectable period of time.

15. The invention according to claim 13, wherein the step of connecting the cellular telephone to the wireless telephone network occurs only after the cellular telephone has been removed from the cradle continuously for at least a minimum predetermined period of time.
